# EUROPÄISCHE PATENTANMELDUNG

(11) **EP 1 541 931 A1**
(43) Veröffentlichungstag der Anmeldung: **15.06.2005**
(21) Anmeldenummer: 04020821.7
(22) Anmeldetag: 02.09.2004
(51) Int. Cl.: F24D 17/00, F24J 2/34, F28D 20/00

(54) **Solar-Warmwassererzeuger für Gartendusche und Warmwasserspeicher**

(30) Priorität: 09.12.2003 DE 20319068 U; 19.02.2004 DE 202004002555 U
(71) Anmelder: Eisenbacher, Matthias, 86641 Rain am Lech (DE)
(72) Erfinder: Eisenbacher, Matthias, 86641 Rain am Lech (DE)

(57) **Zusammenfassung**

Eine Solar-Kompaktanlage besteht aus einem Wasserspeicher (Figur 1 ) und einem Solarkollektor (Figur 2 ).
Der Solarkollektor ist beweglich gelagert (Figur 2 ①).
Durch einen Stellantrieb (Figur 2 ②) wird die Solarfläche der Sonne nachgeführt.
Mit flexiblen Schläuchen (Figur 2 ④) wird das Heizmedium über Heizwendeln oder Wärmetauscher (Figur 2 ③) geführt. Durch die Nachführung erreicht man optimale Sonneneinstrahlung und entsprechend einen deutlich höheren Wirkungsgrad des Solarkollektors.

## Beschreibung

Meine Erfindung besteht aus einer Kombination eines Wasserbehälters mit Solarmodulen.

Meine Erfindung ist gewerblich-technisch anwendbar in fast allen Ein- und Mehrfamilienhäusern mit Grundstück, bei genügend Sonneneinstrahlung.Aber auch auf Terassen und Balkonen ist eine Mini-Kompaktanlage installierbar.

Bei Installation einer solchen Anlage kann zumindest in den Monaten April bis September, je nach Sonnenintensität, die Zentralheizung- Teil Warmwasserversorgung- abgestellt werden. Die Mini-Solaranlage ist ideal verwendbar für Wohnmobile und Wohnwagen.

Entsprechend sind die vorteilhaften Wirkungen der Erfindung:
1. Erhebliche Energieeinsparung (Oel, Gas, Strom)
2. Dadurch Verminderung der Emmissionswerte (Umweltschutz)
3. Anlagenschonung betreffend Heizkessel und Oel- bzw. Gasbrenner

### Beschreibung der Technischen Ausführung meiner Erfindung

Hierzu sind die Zeichnungen vom 28.07.2004 Nr. 1 A "Solar-Warmwassererzeuger für Gartendusche und Warmwasserspeicher" und Nr. 1 B "Mini-Solar-Warmwassererzeuger für Gartendusche und Caravans" zu vergleichen.
Figur 1
Wasserbehälter aus Edelstahlblech (4301) oder Kunststoff.
Die Größe richtet sich nach Personenzahl der Warmwasserverbraucher, (Schutzansprüche 3) und zwar:

| | | | |
|---|---|---|---|
| bei A | ca. 150 I für 2 - 3 Personen | bei B | ca. 60 I für 1 - 2 Personen |
| | ca. 250 I für 3 - 5 Personen | | ca. 120 I für 3 - 5 Personen |

Nr.
1 Ventil für Zufluß Stadtwasser
2 Ventil Warmwasser-Verbrauchsstellen
3 Leerlaßventil
4 Sicherheitsventil
5 Druckmanometer
6 Temperaturanzeige
7 Umwälzpumpe

Figur 2
Solarkollektor
Nr.
1 Drehscharniere für günstige Sonneneinstrahlung
2 Stellmotor mit Zeitschaltuhr oder Sonnensensor.
3 Heizwendel oder Wärmetauscher
4 Flexible Vor- und Rücklaufleitungen für das Heizmedium.

## Patentansprüche

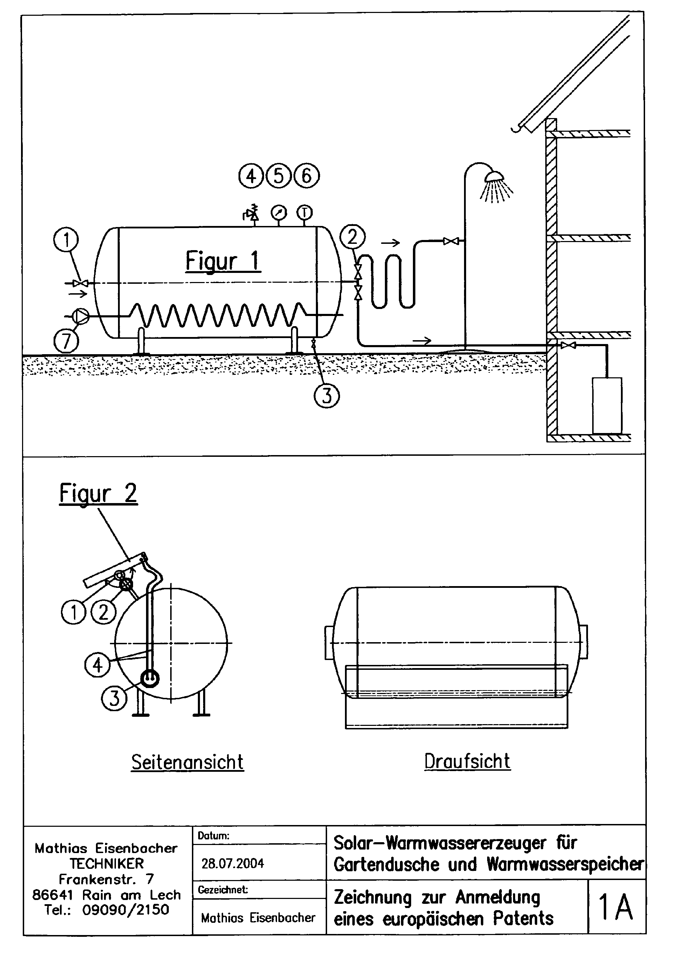

1. Solar-Warmwassererzeuger für Gartendusche und Warmwasserspeicher, sowie Mini-Solar-Warmwassererzeuger für Gartendusche und Caravans, **dadurch gekennzeichnet, dass** ein zylindrischer Behälter mit Einbauten für Verwirbelung zur Temperaturmischung, (Figur 1) erforderlich ist.

2. Solar-Warmwassererzeuger für Gartendusche und Warmwasserspeicher, sowie Mini-Solar-Warmwassererzeuger für Gartendusche und Caravans, nach Anspruch 1 **dadurch gekennzeichnet, dass** der Behälter aus Edelstahlblech oder Kunststoff gefertigt ist.

3. Solar-Warmwassererzeuger für Gartendusche und Warmwasserspeicher, sowie Mini-Solar-Warmwassererzeuger für Gartendusche und Caravans, nach den Ansprüchen 1 und 2, **dadurch gekennzeichnet, dass** die Behältergröße, sich nach Anzahl der Warmwasserverbraucher richtet.
| | | | |
|---|---|---|---|
| bei A | ca. 150 I für 2 - 3 Personen | bei B | ca. 60 I für 1 - 2 Personen |
| | ca. 250 I für 3 - 5 Personen | | ca. 120 I für 3 - 5 Personen |

4. Solar-Warmwassererzeuger für Gartendusche und Warmwasserspeicher, sowie Mini-Solar-Warmwassererzeuger für Gartendusche und Caravans, nach den Ansprüchen 1 - 3, **dadurch gekennzeichnet, dass** ein Absperrventil ¾" oder ½" (Figur 1 ①) angebaut ist.

5. Solar-Warmwassererzeuger für Gartendusche und Warmwasserspeicher, sowie Mini-Solar-Warmwassererzeuger für Gartendusche und Caravans, nach den Ansprüchen 1 - 4, **dadurch gekennzeichnet, dass** 2 Stck Absperrventile ¾" oder ½" (Figur 1 ②) angebaut sind.

6. Solar-Warmwassererzeuger für Gartendusche und Warmwasserspeicher, sowie Mini-Solar-Warmwassererzeuger für Gartendusche und Caravans, nach den Ansprüchen 1 - 5, **dadurch gekennzeichnet, dass** 1 Stck Absperrventil, Leerlaß ½" (Figur 1 ③) angebaut ist.

7. Solar-Warmwassererzeuger für Gartendusche und Warmwasserspeicher, sowie Mini-Solar-Warmwassererzeuger für Gartendusche und Caravans, nach den Ansprüchen 1 - 6, **dadurch gekennzeichnet, dass** ein Sicherheisventil ½" (Figur 1 ④), angebaut ist.

8. Solar-Warmwassererzeuger für Gartendusche und Warmwasserspeicher, sowie Mini-Solar-Warmwassererzeuger für Gartendusche und Caravans, nach den Ansprüchen 1 - 7, **dadurch gekennzeichnet, dass** ein Druckmanometer (Figur 1 ⑤), angebaut ist.

9. Solar-Warmwassererzeuger für Gartendusche und Warmwasserspeicher, sowie Mini-Solar-Warmwassererzeuger für Gartendusche und Caravans, nach den Ansprüchen 1 - 8, **dadurch gekennzeichnet, dass** eine Temperaturanzeige (Figur 1 ⑥), angebaut ist.

10. Solar-Warmwassererzeuger für Gartendusche und Warmwasserspeicher, sowie Mini-Solar-Warmwassererzeuger für Gartendusche und Caravans, nach den Ansprüchen 1 - 9, **dadurch gekennzeichnet, dass** eine Umwälzpumpe (Figur 1 ⑦), eingebaut ist.

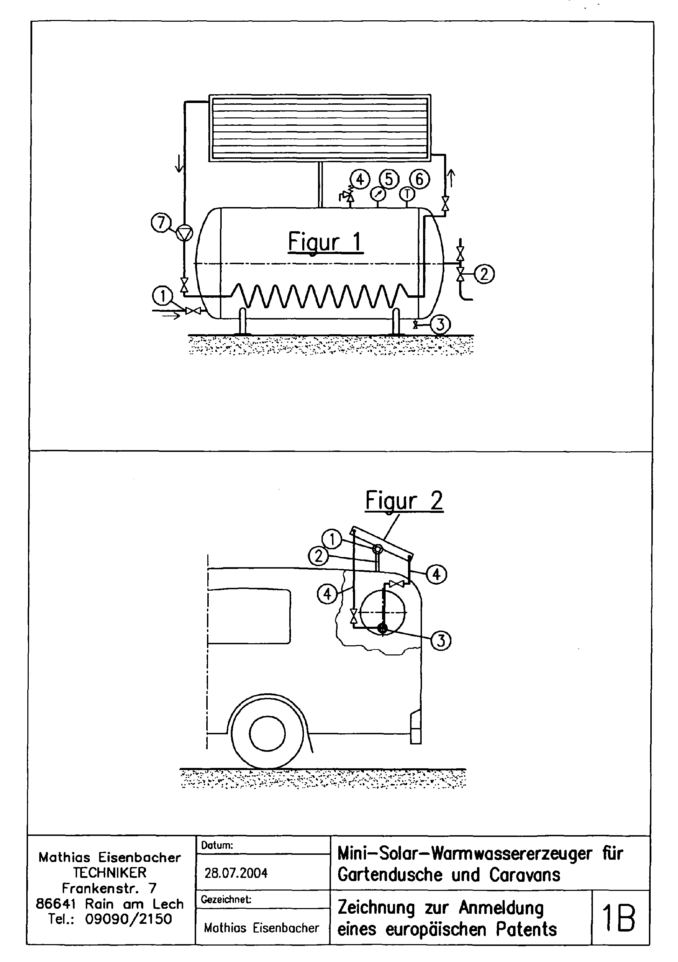

11. Solar-Warmwassererzeuger für Gartendusche und Warmwasserspeicher, sowie Mini-Solar-Warmwassererzeuger für Gartendusche und Caravans, nach den Ansprüchen 1 - 10, **dadurch gekennzeichnet, dass** 1 Stück Solarkollektor entsprechender Fläche (Figur 2), erforderlich ist.

12. Solar-Warmwassererzeuger für Gartendusche und Warmwasserspeicher, sowie Mini-Solar-Warmwassererzeuger für Gartendusche und Caravans,nach den Ansprüchen 1 - 11, **dadurch gekennzeichnet, dass** 1 Stück Drehvorrichtung (Figur 2 ①), angebaut ist.

13. Solar-Warmwassererzeuger für Gartendusche und Warmwasserspeicher, sowie Mini-Solar-Warmwassererzeuger für Gartendusche und Caravans, nach den Ansprüchen 1 - 12, **dadurch gekennzeichnet, dass** ein Stellmotor mit Zeitschaltuhr oder Sonnensensor ( Figur 2 (2)), zur Sonnennachführung angebaut ist.

14. Solar-Warmwassererzeuger für Gartendusche und Warmwasserspeicher, sowie Mini-Solar-Warmwassererzeuger für Gartendusche und Caravans, nach den Ansprüchen 1 - 13, **dadurch gekennzeichnet, dass** 1 Stück Heizwendel (Figur 2 (3)) in den Behälter eingebaut ist.

15. Solar-Warmwassererzeuger für Gartendusche und Warmwasserspeicher, sowie Mini-Solar-Warmwassererzeuger für Gartendusche und Caravans, nach den Ansprüchen 1 - 14, **dadurch gekennzeichnet, dass** flexible Vor- und Rücklaufleitungen für das Heizmedium (Figur ② ④) angeschlossen sind.
